(19) Europäisches Patentamt
European Patent Office
Office européen des brevets

(11) **EP 1 703 809 B1**

(12) **EUROPÄISCHE PATENTSCHRIFT**

(45) Veröffentlichungstag und Bekanntmachung des Hinweises auf die Patenterteilung:
**19.09.2007 Patentblatt 2007/38**

(21) Anmeldenummer: **05807893.2**

(22) Anmeldetag: **25.10.2005**

(51) Int Cl.:
*A23L 3/01* (2006.01)     *F24C 7/08* (2006.01)
*A47J 27/62* (2006.01)

(86) Internationale Anmeldenummer:
**PCT/DE2005/001918**

(87) Internationale Veröffentlichungsnummer:
**WO 2006/045290 (04.05.2006 Gazette 2018/06)**

(54) **VERFAHREN ZUM GAREN VON GARGUTCHARGEN, ENTHALTEND GARGÜTER MIT UNTERSCHIEDLICHEM KALIBER, UND GARGERÄT ZUM IMPLEMENTIEREN SOLCH EINES VERFAHRENS**

METHOD FOR COOKING A COOKING LOAD INCLUDING ITEMS FOR COOKING WITH VARYING SIZE AND COOKING DEVICE FOR CARRYING OUT SUCH METHOD

PROCEDE POUR CUIRE DES CHARGES DE PRODUITS A CUIRE, CONTENANT DES PRODUITS A CUIRE DE CALIBRE DIFFERENT, ET APPAREIL DE CUISSON POUR LA MISE EN OEUVRE DUDIT PROCEDE

(84) Benannte Vertragsstaaten:
**DE FR GB IT**

(30) Priorität: **29.10.2004 DE 102004052660**

(43) Veröffentlichungstag der Anmeldung:
**27.09.2006 Patentblatt 2006/39**

(73) Patentinhaber: **Rational AG**
**86899 Landsberg/Lech (DE)**

(72) Erfinder:
• **IMGRAM, Judith**
**63456 Hanau (DE)**
• **JÜRGENS, Andrea**
**85551 Kirchheim (DE)**
• **LAUTERBACH, Katrin**
**86899 Landsberg (DE)**
• **KLASMEIER, Jürgen**
**86899 Landsberg (DE)**
• **GREINER, Michael**
**86899 Landsberg (DE)**
• **STERZEL, Roland**
**60437 Frankfurt (DE)**

(74) Vertreter: **Weber-Bruls, Dorothée**
**Forrester & Boehmert,**
**Pettenkoferstrasse 20-22**
**80336 München (DE)**

(56) Entgegenhaltungen:
**EP-B- 1 022 972          DE-A1- 10 300 465**
**DE-U1- 29 923 215        US-A- 4 036 995**

EP 1 703 809 B1

## Beschreibung

Die vorliegende Erfindung betrifft ein Verfahren zum Garen einer Gargutcharge, enthaltend mindestens zwei, insbesondere stückartige, Gargüter, deren Garzustand jeweils über mindestens zwei Garzustandsgrößen, umfassend eine erste Garzustandsgröße und eine zweite Garzustandsgröße, charakterisierbar ist, in einem Garraum unter Einsatz mindestens einer Meßeinrichtung zum Aufnehmen von Werten zumindest einer Eigenschaft mindestens eines Garguts, die zumindest eine der Garzustandsgrößen bestimmt, die sich garprozeßbedingt verändert, wobei mindestens zwei der Gargüter der Gargutcharge sich in ihrem Kaliber, in ihrer Gesamtoberfläche, in ihrem Volumen, in ihrem Gewicht und/oder in ihrem Durchmesser, insbesondere mittlerem Durchmesser, voneinander unterscheiden. Ferner betrifft die Erfindung ein Gargerät mit einem Garraum, mindestens einer Meßeinrichtung, insbesondere in Form eines Kerntemperaturfühlers, zum Aufnehmen einer ersten und/oder zweiten Garzustandsgröße von mindestens einem Gargut, einer Heizeinrichtung und einer Steuereinrichtung zum selbsttätigen Führen eines Garprozesses, welche als ein Eingangssignal das Ausgangssignal der Meßeinrichtung empfängt, in dem ein erfindungsgemäßes Verfahren implementiert ist.

Bei herkömmlichen Gargeräten, bei denen ein Kemtemperatursensor, wie er beispielsweise aus der DE 299 23 215 bekannt ist, in ein Gargut, insbesondere in Form eines Fleischstükkes, eingeführt werden kann, wird der Garprozeß in der Regel dann beendet, wenn die Kerntemperatur des Fleischstücks einen vorbestimmten Wert (Soll-Kemtemperatur) erreicht hat. Hierbei kann vorgesehen sein, daß verschiedene Phasen des Garprozesses eingeleitet werden, wenn die Kerntemperatur vorbestimmte Werte während des Garvorgangs erreicht. Optimale Garresultate lassen sich mit diesen Gargeräten allerdings meist nur dann erzielen, wenn hinsichtlich der Art, Menge und Größe des Garguts spezifische, eng eingegrenzte Bedingungen eingehalten werden. Unzufrieden stellende Resultate erhält man mit solchen Gargeräten beispielsweise dann, wenn die individuellen Fleischstücke sich in ihrem Kaliber bzw. ihrer Größe, das heißt ihrer Gesamtoberfläche, ihrem Volumen oder ihrem Durchmesser, unterscheiden. So hängt zum Beispiel der Wert der Kerntemperatur, bei dem eine Bräunungs- bzw. Krustierphase einzuleiten ist, stark von der Dicke von zu garenden Fleischstücken ab. Bei einer reinen Zeitsteuerung des Garprozesses erhält man mit herkömmlichen Garverfahren daher zuweilen Fleischstücke mit entweder zu schwacher oder zu starker Bräunung. Die Komplexität des Garprozesses für das gleichzeitige Garen einer Vielzahl an Fleischstücken unterschiedlichen Kalibers in einem Gargerät wird dadurch noch erhöht, daß der Zeitpunkt, zu dem die Bräunung- bzw. Krustierphase einzuleiten ist, in der Regel ebenfalls von der Menge des Garguts in dem Garraum abhängt.

Mit Hilfe von zusätzlichen Eingabeparametern, die für den Zeitpunkt des Einleitens verschiedener Zubereitungsphasen relevant sind, beispielsweise der Dikke oder Größe eines Fleischstücks, ließe sich zwar mit den bekannten Geräten eine auf die speziellen Eigenschaften des individuellen Garguts abgestellte Führung des Garprozesses erreichen. Dieses erfordert jedoch regelmäßig zusätzliche Meß- und/oder Wiegevorgänge durch den Benutzer vor der Inbetriebnahme des Gargeräts und führt zu einer erheblichen Vergrößerung der Datenmenge, welche die Rechnereinheit des Gargeräts speichern und verwalten muß, um den für die jeweiligen Bedingungen optimalen Garprozeß zur Verfügung stellen zu können.

Beispielsweise aus der EP 1 022 972 B1 ist ein Garverfahren bekannt, bei dem durch Heranziehen des zeitlichen Verhaltens von Meßgrößen, welche sich während des Garprozesses ändernde Eigenschaften eines Gargutes betreffen, die Menge und insbesondere die Dicke des Gargutes bei der Führung des Garprozesses berücksichtigt werden kann, solange es sich um eine im wesentliche homogene Gargutcharge handelt, also die Gargüter sich nicht wesentlich in ihrem Kaliber voneinander unterscheiden.

Insbesondere bei Garchargen, enthaltend eine Vielzahl an Fleischstücken mit stark unterschiedlichem Kaliber, stellen sich jedoch häufig unbefriedigende Garresultate mit den herkömmlichen Gargeräten sowohl im Hinblick auf den internen Gargrad, bestimmt z.B. durch Saftigkeit, wie auch den externen Gargrad, bestimmt z.B. durch den Bräunungs- bzw. Krustierendzustand, ein. Während kleinteilige Fleischstücke zumeist über eine stark ausgeprägte, dicke Kruste mit hohem Bräunungsgrad verfügen und vollständig durchgegart, zuweilen auch übergart und daher trocken sind, stellt man bei großteiligen Fleischstücken eine nur wenig gebräunte Außenschicht und ein häufig nicht einmal vollständig durchgegartes Inneres fest. Da der Nutzer von Gargeräten in der Praxis nahezu regelmäßig damit konfrontiert wird, Fleischstücke unterschiedlicher Größe zu garen, hat ein Bedürfnis nach verbesserten Gargeräten bestanden, die nicht mehr mit den Nachteilen des Stands der Technik behaftet sind.

Aus US 4 036 995 ist eine Einrichtung zur Überwachung des Garfortschrittes einer Vielzahl von Gargütern, welche unterschiedliche Garzeiten benötigen, in einem Ofen mittels unabhängigen Temperaturfühlern für jedes Gargutstück bekannt.

Der vorliegenden Erfindung lag daher die Aufgabe zu Grunde, das gattungsgemäße Garverfahren derart weiterzuentwickeln, daß es die Nachteile des Stands der Technik überwindet, insbesondere mit dem Garverfahren sich auch beim gleichzeitigen Garen von z.B. Fleischstücken unterschiedlichsten Kalibers für jedes dieser Fleischstücke ein optimales Garresulat, insbesondere im Hinblick auf den internen und externen Gargrad, einstellt.

Diese Aufgabe wird erfindungsgemäß durch die folgenden Schritte gelöst:

a) Auswählen zumindest eines ersten Garguts im Garraum, das ein kleineres Kaliber, eine kleinere Gesamtoberfläche, ein kleineres Volumen, ein kleineres Gewicht und/oder einen kleineren Durchmesser als mindestens ein zweites Gargut der Gargutcharge aufweist,

b) Auswählen von Soll-Werten für zumindest die zwei Garzustandsgrößen, umfassend eine erste und eine zweite Soll-Garzustandsgröße, für das erste Gargut,

c) Führen des Garprozesses in der Weise, daß für das erste Gargut mindestens die erste und die zweite Soll-Garzustandsgröße im wesentlichen gleichzeitig erreicht werden, wobei Ist-Werte für zumindest eine der zwei Garzustandsgrößen, umfassend eine erste und/oder zweite Ist-Garzustandsgröße, kontinuierlich oder diskontinuierlich, zumindest des ersten Garguts mit der Meßeinrichtung verfolgt werden,

d) Entziehen des ersten Gargutes aus dem Garprozeß bei oder nach Erreichen der ersten und zweiten Soll-Garzustandsgröße zum Zeitpunkt $t_1$,

e) Auswählen zumindest eines zweiten Garguts, das ein größeres Kaliber, eine größere Gesamtoberfläche, ein größeres Volumen, ein größeres Gewicht und/oder einen größeren Durchmesser aufweist als das erste Gargut,

f) Auswählen von Soll-Werten für zumindest die zwei Garzustandsgrößen, umfassend eine erste und zweite Soll-Garzustandsgröße, für das zweite Gargut,

g) Bestimmen von Ist-Werten für zumindest eine der zwei Garzustandsgrößen, umfassenden eine erste und/oder zweite Ist-Garzustandsgröße, zumindest des zweiten Garguts,

h) Ermitteln der Differenz $D_{12}$ zwischen der ersten Ist-Garzustandsgröße des zweiten Garguts und der ersten Soll-Garzustandsgröße des ersten Garguts oder der Differenz $D'_{12}$ zwischen der zweiten Ist-Garzustandsgröße des zweiten Garguts und der zweiten Soll-Garzustandsgröße des ersten Garguts, frühestens zum Zeitpunkt $t_1$ und spätestens zu einem Zeitpunkt $t_2$ mit $t_2 > t_1$, und/oder Ermitteln der Differenz $D_{22}$ zwischen der zweiten Ist-Garzustandsgröße und der zweiten Soll-Garzustandsgröße oder der Differenz $D'_{22}$ zwischen der ersten Ist-Garzustandsgröße und der ersten Soll-Garzustandsgröße für das zweite Gargut, frühestens zum Zeitpunkt $t_1$ und spätestens zu dem Zeitpunkt $t_2$, und

i) Fortführen des Garprozesses in Abhängigkeit von $D_{12}$, $D'_{12}$, $D_{22}$ und/oder $D'_{22}$ in der Weise, daß mindestens die erste Soll-Garzustandsgröße und die zweite Soll-Garzustandsgröße des zweiten Garguts im wesentlichen gleichzeitig erreicht werden.

Dabei ist bevorzugt, daß der Verlauf des Garprozesses des ersten und/oder zweiten Garguts über die Meßeinrichtung durch Ermittlung von zumindest einem der Ist-Werte und/oder zumindest einer Ableitung zumindest einer der Ist-Werte nach der Zeit erfaßt wird.

Ferner wird mit der Erfindung vorgeschlagen, daß über die Verfolgung des, insbesondere anfänglichen, Garverlaufs des ersten und/oder zweiten Garguts, insbesondere über eine Ableitung mindestens einer ersten, zweiten und/oder weiteren Garzustandsgröße nach der Zeit, das Kaliber, die Gesamtoberfläche, das Volumen, das Gewicht und/oder der Durchmesser des ersten und/oder zweiten Garguts ermittelt und in Abhängigkeit von dem ermittelten Kaliber, der ermittelten Gesamtoberfläche, dem ermittelten Volumen, dem ermittelten Gewicht und/oder dem ermittelten Durchmesser mindestens die erste, zweite und/oder weitere Soll-Garzustandsgröße für das erste und/oder zweite Gargut ausgewählt wird.

Dabei kann vorgesehen sein, daß die erste und/oder zweite Soll-Garzustandsgröße des zweiten Garguts aus der ersten und/oder zweiten Soll-Garzustandsgröße des ersten Garguts abgeleitet wird.

Ferner wird mit der Erfindung vorgeschlagen, daß das erste Gargut dasjenige Gargut der Gartgutcharge mit dem kleinsten Kaliber, der kleinsten Gesamtoberfläche, dem kleinsten Volumen und/oder dem kleinsten Gewicht darstellt, und/oder das zweite Gargut dasjenige Gargut der Gartgutcharge mit der gegenüber dem ersten Gargut nächstgrößeren Kaliber, der nächstgrößeren Gesamtoberfläche, dem nächstgrößeren Volumen und/oder dem nächstgrößeren Gewicht darstellt.

Erfindungsgemäß ist des weiteren bevorzugt, daß als erste Garzustandsgröße eine einen internen Gargrad bestimmende Größe, umfassend die Kerntemperatur, die Saftigkeit und/oder die Textur, und/oder eine Garklimagröße, umfassend die Garraumtemperatur und/oder Feuchte, ausgewählt wird, und/oder als zweite Garzustandsgröße eine einen externen Gargrad bestimmende Größe, umfassend den Bräunungsgrad, eine Oberflächentemperatur, eine Randzonentemperatur, und/oder eine Krustenbildung, und/oder eine die Gargutqualität bestimmende Größe, umfassend den P-Wert (Pasteurisationswert), den F-Wert (Sterilisationstvert), den pH-Wert, den Geruch, den Reifegrad und/oder die Wärmeleitfähigkeit, ausgewählt wird.

Dabei kann vorgesehen sein, daß ein C-Wert, insbesondere ausgewählt aus Bräunungsgrad, P-Wert oder F-Wert, wie folgt ermittelt wird:

$$C_{BT}^{UF} = \int_{ST}^{t_{Ende}} UF^{\frac{[Temp(t)-BT]}{10}} \, dt$$

wobei

ST       den Zeitpunkt, bei dem die Starttemperatur erreicht wird,

$t_{Ende}$       den Zeitpunkt, bei dem der Soll-P-Wert erreicht wird,

Temp (t) die Temperatur in Abhängigkeit von der Zeit,

UF eine Materialkonstante des Garguts und

BT Bezugstemperatur,

darstellen.

Im Schritt i) wird vorzugsweise $D_{12}$ und/oder $D_{22}$ herangezogen.

Auch wird mit der Erfindung vorgeschlagen, daß während des Garprozeß zumindest ein Wert einer den Garprozeß beeinflussenden Einstellgröße des Gargeräts in Abhängigkeit von zumindest einer Ableitung mindestens einer Garzustandsgröße nach der Zeit festgelegt wird.

Erfindungsgemäß kann ferner vorgesehen sein, daß die Energiemenge, die in den Garraum zum Erreichen der ersten und zweiten Soll-Garzustandsgrößen des zweiten Garguts einzubringen ist, in Abhängigkeit von der Energiemenge, die erforderlich gewesen ist, um die ersten und zweiten Soll-Garzustandsgrößen für das erste Gargut zu erreichen, festgelegt wird.

Mit der Erfindung wird auch vorgeschlagen, daß nach Erreichen der ersten und zweiten Soll-Garzustandsgrößen für das erste Gargut, die zweite Ist-Garzustandsgröße des zweiten Garguts bestimmt wird, und der folgende Garprozeß für das zweite Gargut zur gleichzeitigen Erzielung der ersten und zweiten Soll-Garzustandsgrößen des zweiten Garguts in Abhängigkeit von dem Kaliber, der Gesamtoberfläche, dem Volumen und/oder dem Durchmesser, insbesondere dessen Temperaturverlaufe, sowie der Differenz zwischen der ersten Soll-Garzustandsgröße des ersten Garguts und der ersten Ist-Garzustandsgröße des zweiten Garguts geführt wird, wobei insbesondere die Kerntemperatur als erste Garzustandsgröße und der Bräunungsgrad als zweite Garzustandsgröße ausgewählt werden.

Ausführungsformen der Erfindung können dadurch gekennzeichnet sein, daß als Meßeinrichtung ein Garprozeßfühler, insbesondere ein Kerntemperaturfühler, ausgewählt wird, der zu Beginn des Garprozesses, vorzugsweise im Schritt a), in das erste Gargut gesteckt und frühestens zum Zeitpunkt $t_1$ und spätestens zum Zeitpunkt $t_2$, vorzugsweise im Schritt h), in das zweite Gargut umgesteckt wird.

Mit der Erfindung wird auch vorgeschlagen, daß die Schritte a) bis i) solange wiederholt werden, bis alle Gargüter der Gargutcharge, geordnet nach Kaliber, Gesamtoberfläche, Volumen, Gewicht und/oder Durchmesser, fertig gegart sind.

Ferner kann vorgesehen sein, daß als erstes, zweites und/oder weiteres Gargut Schnitzel, Rinderbuge, Spanferkel, Kotelett, Schinken, Geflügel, z.B. Hähnchen, Schweinshaxe, Braten, Gemüse und/oder Teile davon ausgewählt werden.

Der Erfindung liegt auch die Aufgabe zugrunde, das gattungsgemäße Gargerät derart weiterzuentwickeln, daß es die Nachteile des Stands der Technik überwindet.

Diese Aufgabe wird dadurch gelöst, daß die Steuereinrichtung dafür eingerichtet ist, den Garprozeß gemäß dem erfindungsgemäßen Verfahren zu führen.

Dabei kann eine Einrichtung zum Eingeben und zum Speichern von Parameterwerten betreffend das Gargut und/öder den Garprozeß, wobei die Steuereinrichtung einen oder mehrere dieser Parameterwerte als Eingangsgrößen zur Führung des Garprozesses heranzieht, vorgesehen sein.

Schließlich wird erfindungsgemäß vorgeschlagen, daß jede am Ende des Garprozesses zu erzielende Soll-Garzustandsgröße eingebbar ist.

Mit dem erfindungsgemäßen Verfahren stellt sich sowohl bei Gargutchargen, umfassend Gargüter mit einer Vielzahl an unterschiedlichen Volumina, Gewichten, Durchmessern und/oder Oberflächen, als auch bei solchen Gargutchargen, die sich im wesentlichen nur aus Gargütern zweier unterschiedlicher Volumen-, Gewichts-, Durchmesser- und/oder Oberflächenklassen zusammensetzen, ein für jedes individuelle Gargut äußerst zufriedenstellendes Garergebnis ein. Bei Gargütern, die sich hinsichtlich ihres Volumens, ihres Gewichts, ihres Durchmessers und/oder ihre Oberfläche unterscheiden, spricht man in der Regel auch davon, daß diese Gargüter ein unterschiedliches Kaliber aufweisen. Im Sinne der vorliegenden Erfindung sind demzufolge die Begriffe Volumen, Durchmesser, Gewicht bzw. Oberfläche gleichbedeutend mit dem Begriff Kaliber. Bei der Oberfläche, dem Gewicht, dem Volumen und dem Durchmesser handelt es sich um Werte, die für ein individuelles Gargut ermittelbar sind. Unter erstes Gargut im Sinne der vorliegenden Erfindung soll stets ein solches verstanden werden, das ein kleineres Kaliber, d.h. eine kleinere Oberfläche, ein kleineres Gewicht, ein kleineres Volumen und/oder einen kleineren Durchmesser als ein weiteres, zweites Gargut der zu garenden Gargutcharge aufweist. Soll-Garzustandsgrößen stellen in der Regel solche Zustandsgrößen dar, die beim gewünschten Endprodukt realisiert sind. Besonders bevorzugt stellt die erste Gargutgröße eine interne Gargutgröße, wie z.B. die Kerntemperatur, und die zweite Gargutgröße eine externe Gargutgröße, wie z.B. den Bräunungsgrad, dar.

Erfindungsgemäß wird ausgenutzt, daß z.B. in einer Steuereinrichtung eines Gargeräts, die mit einer Meßeinrichtung direkt oder indirekt in Verbindung steht, Garverläufe für standardisierte Gargutkaliber hinterlegt sein können. Wird beispielsweise bei einem vorgegebenen, bekannten anfänglichen Garverlauf für ein mit der Meßeinrichtung zu untersuchendes Gargut eine bestimmte zeitliche Veränderung einer ersten, zweiten oder weiteren Garzustandsgröße festgestellt, kann bei Abgleich mit den hinterlegten Standardwerten unmittelbar auf das Kaliber bzw. die Oberfläche, das Volumen, das Gewicht oder der Durchmesser des Garguts gefolgert werden. Auf diese Weise wird ein zeitaufwändiges, umständliches Ausmessen des Gargutes elegant umgangen. In der Regel reichen bereits 0,5 bis 2 Minuten zu Anfang eines Garzyklus aus, um aus der zeitlichen Veränderung der detektierten Ist-Garzustandsgrößen das Kaliber des untersuchten Garguts ableiten zu können. Bei größeren Gargütern, z.B. bei einer Schweinshaxe, einem Schinken, Braten, Spanferkel oder einen Rinderbug kann dieser Evaluierungszeitraum zur Kaliberbenennung auch etwa 15 Minuten betragen.

Erfindungsgemäß ist dabei ebenfalls vorgesehen, daß über die Verfolgung des insbesondere anfänglichen Garverlaufs des ersten und/oder zweiten Garguts mit mindestens einer Meßeinrichtung, insbesondere über die Ableitung mindestens einer ersten, zweiten oder weiteren Garzustandsgröße nach der Zeit, die Gesamtoberfläche, das Volumen, das Gewicht und/oder der Durchmesser des Garguts ermittelt und in Abhängigkeit von der ermittelten Gesamtoberfläche, dem Volumen, dem Gewicht und/oder Durchmesser mindestens eine erste und/oder zweite Soll-Garzustandsgröße für das erste und/oder zweite Gargut ausgewählt wird. Die ersten und zweiten Garzustandsgrößen können sowohl über eine einheitliche Meßeinrichtung wie auch über separate Meßeinrichtungen festgehalten werden.

In einer Weiterbildung des erfindungsgemäßen Verfahrens ist vorgesehen, daß die erste und/oder zweite Ist-Garzustandsgröße des zweiten Garguts aus der ersten und/oder zweiten Soll-Garzustandsgröße des ersten Garguts abgeleitet wird. Beispielsweise läßt sich der Bräunungsgrad des zweiten Garguts bei Erreichen des Soll-Bräunungsgrads des ersten Garguts unter Berücksichtigung der zur Verfügung stehenden Garzustandsgrößen und Garparameter ermitteln, ohne daß dieser Bräunungsgrad z.B. explizit spektroskopisch festgestellt werden müßte. In diesem Fall reicht es z.B. aus, wenn in der Steuereinheit des Gargerätes skalierte Standardvergleichswerte für die in Frage kommenden Garverläufe hinterlegt sind. Aus der Kenntnis des Kalibers des ersten Garguts, des Garverlaufs zum Erreichen der ersten und zweiten Soll-Garzustandsgrößen des ersten Garguts sowie den Werten für die ersten und/oder zweiten Soll-Garzustandsgröße des ersten Garguts läßt sich dann ohne weiteres die erste und/oder zweite Ist-Garzustandsgröße des zweiten Garguts ableiten.

In einer weiteren Ausführungsform ist vorgesehen, daß das erste Gargut dasjenige Gargut der Gargutcharge mit der kleinsten Gesamtoberfläche, dem kleinsten Volumen, dem kleinsten Durchmesser und/oder dem kleinsten Gewicht darstellt. Es hat sich als zweckmäßig erwiesen, das erfindungsgemäße Garverfahren in der Weise anzuwenden, daß als erstes Gargut zunächst dasjenige Gargut mit dem kleinsten Kaliber innerhalb der Gargutcharge ausgewählt wird. Bevorzugterweise stellt das zweite Gargut dann dasjenige mit dem nächstgrößeren Kaliber, das heißt mit dem nächstgrößeren Volumen, Durchmesser, Gewicht und/oder der nächstgrößeren Oberfläche dar. Sobald das erste Gargut die gewünschte Soll-Gargutzustandsgröße erreicht hat, wird es dem Garprozeß entzogen, vorzugsweise aus dem Garraum entfernt. Nachdem dieses geschehen ist, stellt das vormals zweite Gargut nunmehr selber ein erstes Gargut dar, für das der Garprozeß in der Weise zu führen ist, das die ersten und zweiten Garzustandsgrößen dieses Garguts im wesentlichen gleichzeitig die jeweils gewünschten Soll-Werte erreichen. Das Gargut mit einem größeren, insbesondere dem nächstgrößeren Kaliber ist sodann als zweites Gargut im Sinne der Erfindung zu bezeichnen. Dieses Verfahren wird vorzugsweise solange fortgesetzt, bis man beim größten Kaliber der Gargutcharge angelangt ist und auch für dieses die ersten und zweiten Soll-Garzustandsgrößen im wesentlichen gleichzeitig erreicht worden sind.

Vorzugsweise stellt die erste Garzustandsgröße die Kerntemperatur eines Garguts dar. Bei der zweiten Garzustandsgröße handelt es sich vorzugsweise um den P-Wert, den F-Wert, den C-Wert und/oder den Bräunungsgrad des Garguts.

Der P-Wert gestattet eine wesentlich exaktere Aussage über den Garungszustand eines Garguts als z.B. die Gartemperatur. Wenn z.B. Kartoffeln gegart werden, steht hierfür beim Druckdampfgaren eine Temperatur von beispielsweise 120°C zur Verfügung, während beim normalen Dampfgaren das gleiche Garresultat bei einer Temperatur von etwa 98°C erreicht werde kann. Hierbei unterscheiden sich allerdings die Zeiträume, die erforderlich sind, um das gewünschte Garresultat zu erzielen, beträchtlich. Der P-Wert stellt dabei einen Pastorisierungswert dar, über den der Grad der Pastorisierung eines Gargutes, d.h. der Keimfreiheit, abgebildet werden kann.

Ein kleinerer P-Wert steht demzufolge z.B. für den Endgarzustand al dente, während ein höherer P-Wert ein durchgegartes Gargut repräsentiert.

Der Umrechnungsfaktor UF, der zur Bestimmung des P-Wertes heranzuziehen ist, ist eine spezifische Gargutgröße, die z.B. über standardisierte Garversuche bei unterschiedlichen Temperaturen dadurch ermittelt werden kann, daß die für die jeweiligen Temperaturen charakteristischen Garzeiten zueinander ins Verhältnis gesetzt werden. Innerhalb einer Gargutklasse bzw. für einen bestimmten Garguttyp sollte dieser Umrechnungsfaktor im wesentlichen konstant sein. Die Bezugstemperatur BT stellt im allgemeinen diejenige Temperatur dar, bei der üblicherweise die Garung des Garguts vorgenommen wird.

Der F-Wert kann ebenfalls herangezogen werden, um eine Aussage über den Garrungszustand zu machen. Insbesondere bei der Berechnung P- und F-Wertes kann anstelle der sich zeitlich verändernden Garraumtemperatur Temp (t) insbesondere auch die Ist-Kerntemperatur als variable Größe eingesetzt werden.

Grundsätzlich eignen sich die vorhergehend genannten Gleichungen zur Bestimmung des P-Wertes sowie F-Wertes für die Beschreibung chemischer Reaktionen 1. Ordnung. Sofern z.B. auch die Bräunung eines Gargutes annähernd sich wie eine Reaktion 1. Ordnung verhält, können die obigen Gleichungen Analog auch für die Bestimmung bzw. Einbindung des Bräunungsgrades bei der Festlegung des jeweils optimalen Garverlaufs einbezogen werden.

Chemische Reaktionen 1. Ordnung bzw. deren Auswirkungen im Lebensmittelbereich finden sich z.B. beschrieben bei H.G. Kessler, "Lebensmittel und Bioverfahrenstechnik - Molkerei Technologie", TU München, Weihenstephan, Verlag A. Kessler, ISBN 3 9802378-4-2, dort insbesondere die Seiten 27 bis 48 und 127 bis 178.

Besonders vorteilhaft ist, eine Speichereinheit vorzusehen, in welcher eine Zuordnung von Werten zumindest einer der Ableitungen einer Garzustandsgröße nach der Zeit zu Soll-Werten von Einstellgrößen des Gargeräts festgehalten ist und auf welche die Steuereinrichtung bei der Bestimmung der Soll-Werte für diese Einstellgrößen zugreifen kann. Zusätzlich zu der Ableitung können weitere Zuordnungsparameter, z.B. der aktuelle Wert der Garzustandsgröße oder die Zeit seit Beginn des Garvorgangs, vorgesehen sein. Dabei können die Soll-Werte in der Speichereinrichtung insbesondere als numerische Daten abgespeichert und durch Angabe von Adressdaten abrufbar sein, die einen Wert für die erste Ableitung einer Garzustandsgröße umfassen, so daß auf eine Eingabe des Wertes dieser Ableitung und gegebenenfalls weiterer Adressdaten, welche beispielsweise den aktuellen Wert der Garzustandsgröße oder die Art des Garguts betreffen können, ein Zugriff auf den zugehörigen abgespeicherten Soll-Wert erfolgt.

Das erfindungsgemäße Gargerät kann weiterhin für eine Beeinflussung von Einstellgrößen von Hand eingerichtet sein sowie eine Einrichtung zum Abspeichern der von der Steuereinrichtung oder von einem Bediener vorgegebenen Werte für Einstellgrößen zusammen mit den zugehörigen Meßwerten einer Garzustandsgröße und/oder einer oder mehrerer ihrer Ableitungen nach der Zeit in der Weise aufweisen, daß die Steuereinrichtung auf der Grundlage der so abgespeicherten Daten eines früheren Garprozesses sowie der von einem oder mehreren Meßwertaufnehmern in einem aktuellen Garpozeß aufgenommenen Meßwerte die Abfolge von Werten der Einstellgröße des früheren Prozesses produzieren kann. Hierbei kann insbesondere beim Abspeichern eine Zuordnung von Werten der Ableitung einer Garzustandsgröße zu Soll-Werten einer Einstellgröße des Gargeräts, wie vorangehend beschrieben, erzeugt werden.

Mit dem erfindungsgemäßen Verfahren gelingt es nunmehr, Garchargen die aus einer Vielzahl an individuellen Gargütern unterschiedlichsten Kalibers zusammengesetzt sind, optimal zu garen, das heißt für jedes individuelle Gargut ein optimales Garresultat in einem einzigen, zusammenhängenden Garprozeß zu erhalten. Hierbei kann bei Erreichen des gewünschten Garerfolgs für ein Gargut eines bestimmten Kalibers der Garprozeß dadurch weitergeführt werden, daß die Meßeinrichtung auf ein größeres, insbesondere das nächst größere Kaliber gerichtet wird, was z.B. durch Umstecken des Gazprozeßfühlers, insbesondere des Kerntemperaturfühlers, von einem ersten in ein zweites Gargut bewerkstelligt wird. So kann beispielsweise anhand des Anstiegs der Kerntemperatur pro Zeit bei definierter Garraumtemperatur und Lüfterstufe, d.h. bei einem definierten Energieübertrag, erkannt werden, um welches Kaliber es sich bei dem zu vermessenden Lebensmittel handelt. Sobald die Größe bzw. das Kaliber des Garguts ermittelt worden ist, kann dann der Garprozeß in entsprechender Weise an dieses Kaliber angepaßt werden, um das gewünschte Garresultat, ausgedrückt z.B. in Form der ersten und zweiten Soll-Garzustandsgrößen, zu erreichen. Beispielsweise dauert bei einem größeren Gargut die Bräunungsphase in der Regel länger, weshalb es sich empfiehlt, diese Phase bei niedrigeren Temperaturen zu fahren als bei einem kleineren Gargut, das die gleiche Endbräunung erhalten soll.

Weitere Merkmale und Vorteile der Erfindung ergeben sich aus der nachstehenden Beschreibung, in der eine Ausführungsform eines erfindungsgemäßen Verfahrens beispielhaft anhand zweier Zeichnungen erläutert wird. Dabei zeigt

Figur 1   ein nicht maßstabsgetreues Kerntemperatur/ Zeit-Diagramm für ein Garverfahren gemäß dem Stand der Technik,

Figur 2   ein nicht maßstabgetreues Kerntemperatur/ Zeit-Diagramm für ein erfindungsgemäßes Garverfahren und

Figur 3   ein weiteres nicht maßstabsgetreues Kerntemperatur/Zeit-Diagramm für ein erfindungsgemäßes Garverfahren.

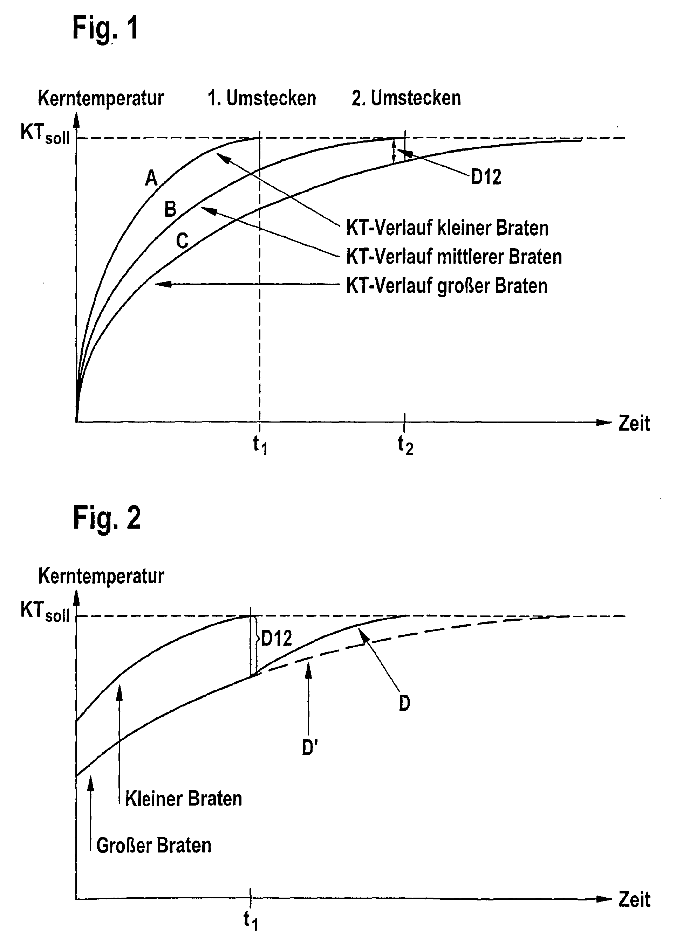

Der Figur 1 sind drei Graphen A, B und C zu entnehmen, die den Verlauf der Ist-Kerntemperatur bis zum Erreichen der Soll-Kerntemperatur $KT_{Soll}$ für ein kleines, mittleres und großes Gargut wiedergeben. Dabei ist das Garverfahren in der Weise eingestellt, daß das kleine Gargut (Graph A) zu dem Zeitpunkt $t_1$ neben seiner Soll-Kerntemperatur gleichzeitig auch den gewünschten Bräunungsgrad, d.h. eine zweite Soll-Garzustandsgröße erreicht. Wird anschließend, also zum Zeitpunkt $t_1$, ein nicht dargestellter, zunächst die Kerntemperatur des ersten, kleinen Garguts kontrollierender, Kerntemperaturfühler in das zweite, mittlere Gargut umgesteckt und der Garprozeß kerntemperaturkontrolliert fortgeführt, z.B. bei im wesentlichen unveränderter Garraumtemperatur, so gelangt man bei einem Zeitpunkt $t_2$ für das mittlere Gargut (Graph B) zu der Soll-Kerntemperatur. Allerdings ist bei dieser Vorgehensweise nicht gewährleistet, daß zu diesem Zeitpunkt $t_2$ sich ebenfalls der gewünschte Bräunungsgrad, d.h. die zweite Soll-Garzustandsgröße, des mittleren Garguts einstellt. Nachdem für das mittlere Gargut die Soll-Kerntemperatur erreicht worden ist, also zum Zeitpunkt $t_2$, wird bei herkömmlichen Garverfahren nach Umstecken des Kerntemperaturfühlers in das große Gargut der Garprozeß wiederum kerntemperaturkontrolliert bis zum Erreichen der Soll-Kerntemperatur für das große Gargut (Graph C) fortgeführt unter Inkaufnahme der gleichen Nachteile, wie vorangehend für das mittlere Gargut geschildert. In Bezug auf das große Gargut stellt im Sinne der vorliegenden Anmeldung das mittlere Gargut dann das erste Gargut dar, während das große Gargut als zweites Gargut zu bezeichnen ist. Wird das Garen jeweils nur kerntemperaturkontrolliert durchgeführt, wird häufig nicht der gewünschte Bräunungsgrad erreicht.

Wie Figur 2 zu entnehmen ist, wird bei einem erfindungsgemäßen Garverfahren nach dem Erreichen der Soll-Kemtemperatur für ein erstes, kleineres Gargut der Garverlauf für das zweite, größere Gargut nicht mehr nur kerntemperaturkontrolliert fortgeführt, sondern es findet eine Neuanpassung bzw. -ausrichtung des Garverfahrens statt, so daß bei Erreichen der Soll-Kemtemperatur für das größere Gargut gleichzeitig der optimale Bräunungsgrad erreicht wird. Die Anpassung des Garverfahrens zur Erreichung dieses Zieles wird vorgenommen auf der Grundlage der Differenz $D_{12}$ zwischen der Soll-Kerntemperatur des kleineren Gargutes und der Ist-Kerntemperatur des größeren Gargutes zum Zeitpunkt $t_1$, das heißt bei Erreichen der Soll-Kerntemperatur für das kleinere Gargut und somit beim Umstecken des Kerntemperaturfühlers, bzw. auf der Basis der Differenz $D_{22}$ von Ist- und Soll-Kerntemperatur des größeren Garguts unter Berücksichtigung des Kalibers des größeren Garguts. Demgemäß wird die Garraumtemperatur auf der Grundlage des neu errechneten optimalen Kemtemperaturverlaufs gemäß Kurve D bis zum Erreichen der Soll-Kemtemperatur für das größere Gargut angepaßt. Der Verlauf der Ist-Kerntemperatur des größeren Garguts bei einem herkömmlichen, nur kerntemperaturgeführten Garverfahren ist durch die gestrichelte Linie D' angedeutet.

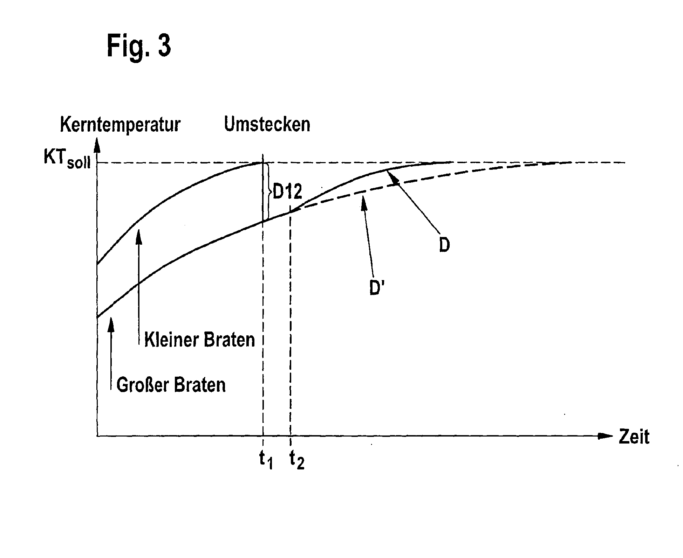

Figur 3 zeigt den Verlauf der Kerntemperatur eines kleineren sowie eines größeren Garguts über die Zeit ähnlich wie bei Figur 2, jedoch mit dem Unterschied, daß das Garverfahren nach dem Umstecken des Kerntemperaturfühlers bzw. dem Erreichen der Soll-Kerntemperatur zum Zeitpunkt $t_1$ für das kleinere Gargut ab dem Zeitpunkt $t_1$ für eine gewisse Zeitspanne, nämlich $t_2 - t_1$, also bis zum Zeitpunkt $t_2$ auf herkömmliche Weise fortgeführt wird. Diese Zeitspanne wird genutzt, um über die zeitliche Veränderung der Ist-Kerntemperatur des größeren Garguts Rückschlüsse auf dessen Kaliber ziehen zu können. Sobald das Kaliber auf diese Art und Weise abgeschätzt bzw. ermittelt worden ist, wird der Garprozess in der Weise, wie vorangehend für das Verfahren gemäß Figur 2 beschrieben, fortgeführt, d.h. die Garraumtemperatur wird in der Weise geändert, daß die Kerntemperatur als erste Garzustandsgröße und eine zweite Garzustandsgröße, z.B. der Bräunungsgrad, im wesentlichen gleichzeitig Ihre gewünschten Soll-Werte auch für das größere Gargut erreicht.

Die in der vorangehenden Beschreibung, in den Ansprüchen und in den Zeichnungen offenbarten Merkmale der Erfindung können sowohl einzeln als auch in jeder beliebigen Kombination für die Realisierung der Erfindung in ihren verschiedenen Ausführungsformen wesentlich sein.

**Patentansprüche**

1. Verfahren zum Garen einer Gargutcharge, enthaltend mindestens zwei, insbesondere stückartige, Gargüter, deren Garzustand jeweils über mindestens zwei Garzustandsgrößen, umfassend eine erste Garzustandsgröße und eine zweite Garzustandsgröße, charakterisierbar ist, in einem Garraum unter Einsatz mindestens einer Meßeinrichtung zum Aufnehmen von Werten zumindest einer Eigenschaft mindestens eines Garguts, die zumindest eine der Garzustandsgrößen bestimmt, die sich garprozeßbedingt verändert, wobei mindestens zwei der Gargüter der Gargutcharge sich in ihrem Kaliber, in ihrer Gesamtoberfläche, in ihrem Volumen, in ihrem Gewicht und/oder in ihrem Durchmesser, insbesondere mittlerem Durchmesser, voneinander unterscheiden, **gekennzeichnet durch** die folgenden Schritte:

    a) Auswählen zumindest eines ersten Garguts im Garraum, das ein kleineres Kaliber, eine kleinere Gesamtoberfläche, ein kleineres Volumen, ein kleineres Gewicht und/oder einen kleineren Durchmesser als mindestens ein zweites Gargut der Gargutcharge aufweist,

    b) Auswählen von Soll-Werten für zumindest die zwei Garzustandsgrößen, umfassend eine erste und eine zweite Soll-Garzustandsgröße, für das erste Gargut,

    c) Führen des Garprozesses in der Weise, daß für das erste Gargut mindestens die erste und die zweite Soll-Garzustandsgröße im wesentlichen gleichzeitig erreicht werden, wobei Ist-Werte für zumindest eine der zwei Garzustandsgrößen, umfassend eine erste und/oder zweite Ist-Garzustandsgröße, kontinuierlich oder diskontinuierlich, zumindest des ersten Garguts mit der Meßeinrichtung verfolgt werden,

    d) Entziehen des ersten Gargutes aus dem Garprozeß bei oder nach Erreichen der ersten und zweiten Soll-Garzustandsgröße zum Zeitpunkt $t_1$,

    e) Auswählen zumindest eines zweiten Garguts, das ein größeres Kaliber, eine größere Gesamtoberfläche, ein größeres Volumen, ein größeres Gewicht und/oder einen größeren Durchmesser aufweist als das erste Gargut,

    f) Auswählen von Soll-Werten für zumindest die zwei Garzustandsgrößen, umfassend eine erste und zweite Soll-Garzustandsgröße, für das zweite Gargut,

    g) Bestimmen von Ist-Werten für zumindest eine der zwei Garzustandsgrößen, umfassenden eine erste und/oder zweite Ist-Garzustandsgröße, zumindest des zweiten Garguts,

    h) Ermitteln der Differenz $D_{12}$ zwischen der ersten Ist-Garzustandsgröße des zweiten Garguts und der ersten Soll-Garzustandsgröße des ersten Garguts oder der Differenz $D'_{12}$ zwischen der zweiten Ist-Garzustandsgröße des zweiten Garguts und der zweiten Soll-Garzustandsgröße des ersten Garguts, frühestens zum Zeitpunkt $t_1$ und spätestens zu einem Zeitpunkt $t_2$ mit $t_2 > t_1$, und/oder

Ermitteln der Differenz $D_{22}$ zwischen der zweiten Ist-Garzustandsgröße und der zweiten Soll-Garzustandsgröße oder der Differenz $D'_{22}$ zwischen der ersten Ist-Garzustandsgröße und der ersten Soll-Garzustandsgröße für das zweite Gargut, frühestens zum Zeitpunkt $t_1$ und spätestens zu dem Zeitpunkt $t_2$, und

i) Fortführen des Garprozesses in Abhängigkeit von $D_{12}$, $D'_{12}$, $D_{22}$ und/oder $D'_{22}$ in der Weise, daß mindestens die erste Soll-Garzustandsgröße und die zweite Soll-Garzustandsgröße des zweiten Garguts im wesentlichen gleichzeitig erreicht werden.

2. Verfahren nach Anspruch 1, **dadurch gekennzeichnet, daß**
der Verlauf des Garprozesses des ersten und/oder zweiten Garguts über die Meßeinrichtung durch Ermittlung von zumindest einem der Ist-Werte und/oder zumindest einer Ableitung zumindest einer der Ist-Werte nach der Zeit erfaßt wird.

3. Verfahren nach Anspruch 2, **dadurch gekennzeichnet, daß**
über die Verfolgung des, insbesondere anfänglichen, Garverlaufs des ersten und/oder zweiten Garguts, insbesondere über eine Ableitung mindestens einer ersten, zweiten und/oder weiteren Garzustandsgröße nach der Zeit, das Kaliber, die Gesamtoberfläche, das Volumen, das Gewicht und/oder der Durchmesser des ersten und/oder zweiten Garguts ermittelt und in Abhängigkeit von dem ermittelten Kaliber, der ermittelten Gesamtoberfläche, dem ermittelten Volumen, dem ermittelten Gewicht und/oder dem ermittelten Durchmesser mindestens die erste, zweite und/oder weitere Soll-Garzustandsgröße für das erste und/oder zweite Gargut ausgewählt wird.

4. Verfahren nach einem der vorangehenden Ansprüche, **dadurch gekennzeichnet, daß** die erste und/oder zweite Soll-Garzustandsgröße des zweiten Garguts aus der ersten und/oder zweiten Soll-Garzustandsgröße des ersten Garguts abgeleitet wird.

5. Verfahren nach einem der vorangehenden Ansprüche, **dadurch gekennzeichnet, daß** das erste Gargut dasjenige Gargut der Gartgutcharge mit dem kleinsten Kaliber, der kleinsten Gesamtoberfläche, dem kleinsten Volumen und/oder dem kleinsten Gewicht darstellt, und/oder das zweite Gargut dasjenige Gargut der Gartgutcharge mit der gegenüber dem ersten Gargut nächstgrößeren Kaliber, der nächstgrößeren Gesamtoberfläche, dem nächstgrößeren Volumen und/oder dem nächstgrößeren Gewicht darstellt.

6. Verfahren nach einem der vorangehenden Ansprüche, **dadurch gekennzeichnet, daß** als erste Garzustandsgröße eine einen internen Gargrad bestimmende Größe, umfassend die Kerntemperatur, die Saftigkeit und/oder die Textur, und/oder eine Garklimagröße, umfassend die Garraumtemperatur und/oder Feuchte, ausgewählt wird, und/oder
als zweite Garzustandsgröße eine einen externen Gargrad bestimmende Größe, umfassend den Bräunungsgrad, eine Oberflächentemperatur, eine Randzonentemperatur, und/oder eine Krustenbildung, und/oder eine die Gargutqualität bestimmende Größe, umfassend den P-Wert (Pasteurisationswert), den F-Wert (Sterilisationswert), den pH-Wert, den Geruch, den Reifegrad und/oder die Wärmeleitfähigkeit, ausgewählt wird.

7. Verfahren nach Anspruch 5 oder 6, **dadurch gekennzeichnet, daß**
ein C-Wert, insbesondere ausgewählt aus Bräunungsgrad, P-Wert oder F-Wert, wie folgt ermittelt wird:

$$C_{BT}^{UF} = \int_{ST}^{t_{Ende}} UF^{\frac{[Temp(t) - BT]}{10}} \, dt$$

wobei

ST den Zeitpunkt, bei dem die Starttemperatur erreicht wird,
$t_{Ende}$ den Zeitpunkt, bei dem der Soll-C-Wert erreicht wird,
Temp (t) die Temperatur in Abhängigkeit von der Zeit,
UF eine Materialkonstante des Garguts und
BT Bezugstemperatur,

darstellen.

8. Verfahren nach einem der vorangehenden Ansprüche, **dadurch gekennzeichnet, daß** im Schritt i) $D_{12}$ und/oder $D_{22}$ herangezogen wird.

9. Verfahren nach einem der vorangehenden Ansprüche, **dadurch gekennzeichnet, daß** während des Garprozesses zumindest ein Wert einer den Garprozeß beeinflussenden Einstellgröße des Gargeräts in Abhängigkeit von zumindest einer Ableitung mindestens einer Garzustandsgröße nach der Zeit festgelegt wird.

**10.** Verfahren nach einem der vorangehenden Ansprüche, **dadurch gekennzeichnet, daß** die Energiemenge, die in den Garraum zum Erreichen der ersten und zweiten Soll-Garzustandsgrößen des zweiten Garguts einzubringen ist, in Abhängigkeit von der Energiemenge, die erforderlich gewesen ist, um die ersten und zweiten Soll-Garzustandsgrößen für das erste Gargut zu erreichen, festgelegt wird.

**11.** Verfahren nach einem der vorangehenden Ansprüche, **dadurch gekennzeichnet, daß** nach Erreichen der ersten und zweiten Soll-Garzustandsgrößen für das erste Gargut, die zweite Ist-Garzustandsgröße des zweiten Garguts bestimmt wird, und der folgende Garprozeß für das zweite Gargut zur gleichzeitigen Erzielung der ersten und zweiten Soll-Garzustandsgrößen des zweiten Garguts in Abhängigkeit von dem Kaliber, der Gesamtoberfläche, dem Volumen und/oder dem Durchmesser, insbesondere dessen Temperaturverlaufe, sowie der Differenz zwischen der ersten Soll-Garzustandsgröße des ersten Garguts und der ersten Ist-Garzustandsgröße des zweiten Garguts geführt wird, wobei insbesondere die Kerntemperatur als erste Garzustandsgröße und der Bräunungsgrad als zweite Garzustandsgröße ausgewählt werden.

**12.** Verfahren nach einem der vorangehenden Ansprüche, **dadurch gekennzeichnet, daß** als Meßeinrichtung ein Garprozeßfühler, insbesondere ein Kerntemperaturfühler, ausgewählt wird, der zu Beginn des Garprozesses, vorzugsweise im Schritt a), in das erste Gargut gesteckt und frühestens zum Zeitpunkt $t_1$ und spätestens zum Zeitpunkt $t_2$, vorzugsweise im Schritt h), in das zweite Gargut umgesteckt wird.

**13.** Verfahren nach einem der vorangehenden Ansprüche, **dadurch gekennzeichnet, daß** die Schritte a) bis i) solange wiederholt werden, bis alle Gargüter der Gargutcharge, geordnet nach Kaliber, Gesamtoberfläche, Volumen, Gewicht und/oder Durchmesser, fertig gegart sind.

**14.** Verfahren nach einem der vorangehenden Ansprüche, **dadurch gekennzeichnet, daß** als erstes, zweites und/oder weiteres Gargut Schnitzel, Rinderbuge, Spanferkel, Kotelett, Schinken, Geflügel, z.B. Hähnchen, Schweinshaxe, Braten, Gemüse und/oder Teile davon ausgewählt werden.

**15.** Gargerät mit einem Garraum, mindestens einer Meßeinrichtung, insbesondere in Form eines Kerntemperaturfühlers, zum Aufnehmen einer ersten und/oder zweiten Garzustandsgröße von mindestens einem Gargut, einer Heizeinrichtung und einer Steuereinrichtung zum selbsttätigen Führen eines Garprozesses, welche als ein Eingangssignal das Ausgangssignal der Meßeinrichtung empfängt, **dadurch gekennzeichnet, daß** die Steuereinrichtung dafür eingerichtet ist, den Garprozeß gemäß einem Verfahren nach den Ansprüchen 1 bis 14 zu führen.

**16.** Gargerät nach Anspruch 15, **gekennzeichnet durch**
eine Einrichtung zum Eingeben und zum Speichern von Parameterwerten betreffend das Gargut und/oder den Garprozeß, wobei die Steuereinrichtung einen oder mehrere dieser Parameterwerte als Eingangsgrößen zur Führung des Garprozesses heranzieht.

**17.** Gargerät nach Anspruch 16, **dadurch gekennzeichnet, daß**
jede am Ende des Garprozesses zu erzielende Soll-Garzustandsgröße eingebbar ist.

**Claims**

**1.** Method for cooking a batch of items that is to be cooked, containing at least two, in particular piece-like items to be cooked whose cooked state can be **characterized in** each case by means of at least two cooking state variables, comprising a first cooking state variable and a second cooking state variable, in a cooking space using at least one measuring device for recording values of at least one property of at least one item to be cooked which determines at least one of the cooking state variables which changes as a function of the cooking process, wherein at least two of the items to be cooked of the batch of items to be cooked differ from one another in terms of their size, their overall surface area, their volume, their weight and/or their diameter, in particular average diameter, **characterized by** the following steps:

    a) selection of at least a first item to be cooked in the cooking space which has a smaller size, a smaller overall surface, a smaller volume, a lower weight and/or a smaller diameter than at least a second item to be cooked in the batch of items to be cooked,
    b) Selection of setpoint values for at least the two cooking state variables, comprising a first and a second setpoint cooking state variable, for the first item to be cooked,
    c) Control of the cooking process in such a way that for the first item to be cooked at least the first and second setpoint cooking state variable are reached essentially simultaneously, wherein actual values for at least one of the two cooking state variable, comprising a first and/or second actual cooking state variable, of at least the first item to be cooked are continuously or intermittently followed with the measuring device,

d) withdrawal of the first item to be cooked from the cooking process when or after the first and second setpoint cooking state variables are reached at the time $t_1$,

e) selection of at least a second item to be cooked which has a larger size, a larger overall surface, a larger volume, a larger weight and/or a larger diameter than the first item to be cooked,

f) selection of setpoint values for at least the two cooking state variables, comprising a first and second setpoint cooking state variable, for the second item to be cooked,

g) determination of actual values for at least one of the two cooking state variables, comprising a first and/or second actual cooking state variable, at least of the second item to be cooked,

h) acquisition of the difference $D_{12}$ between the first actual cooking state variable of the second item to be cooked and the first setpoint cooking state variable of the first item to be cooked or the difference $D'_{12}$ between the second actual cooking state variable of the second item to be cooked and the second setpoint cooking state variable of the first item to be cooked, at the earliest at the time $t_1$ and at the latest at a time $t_2$ where $t_2 > t_1$, and/or

acquisition of the difference $D_{22}$ between the second actual cooking state variable and the second setpoint cooking state variable or the difference $D'_{22}$ between the first actual cooking state variable and the first setpoint cooking state variable for the second item to be cooked, at the earliest at the time $t_1$ and at the latest at the time $t_2$, and

i) continuation of the cooking process as a function of $D_{12}$, $D'_{12}$, $D_{22}$ and/or $D'_{22}$ in such a way that at least the first setpoint cooking state variable and the second setpoint cooking state variable of the second item to be cooked are reached essentially at the same time.

2. Method according to Claim 1, **characterized in that** the profile of the cooking process of the first and/or second items to be cooked is registered by means of the measuring device by identifying at least one of the actual values and/or at least one derivative of at least one of the actual values over time.

3. Method according to Claim 2, **characterized in that** the size, the overall surface, the volume, the weight and/or the diameter of the first and/or second items to be cooked are acquired by tracking the, in particular initial, cooking profile of the first and/or second items to be cooked, in particular by means of a derivative of at least a first, second and/or further cooking state variable over time, and at least the first, second and/or further setpoint cooking state variables for the first and/or second items to be cooked are selected as a function of the acquired size, the acquired overall surface area, the acquired volume, the acquired weight and/or the acquired diameter.

4. Method according to one of the preceding claims, **characterized in that** the first and/or second setpoint cooking state variables of the second item to be cooked are derived from the first and/or second setpoint cooking state variables of the first item to be cooked.

5. Method according to one of the preceding claims, **characterized in that** the first item to be cooked is the item to be cooked from the batch of items to be cooked which has the smallest size, the smallest overall surface area, the smallest volume and/or the lowest weight, and/or the second item to be cooked is the item to be cooked from the batch of items to be cooked which has the next largest size, the next largest overall surface area, the next largest volume and/or the next largest weight compared to the first item to be cooked.

6. Method according to one of the preceding claims, **characterized in that** a variable which determines an internal degree of cooking, comprising the core temperature, the juiciness and/or the texture and/or a cooking environment variable, comprising the cooking space temperature and/or moisture is selected as the first cooking state variable, and/or

a variable which determines an external degree of cooking, comprising the degree of browning, a surface temperature, an edge zone temperature and/or formation of crust and/or a variable which determines the quality of the item to be cooked, comprising the P value (pasteurization value), the F value (sterilization value), the pH value, the smell, the degree of maturity and/or the thermal conductivity, is selected as the second cooking state variable.

7. Method according to Claim 5 or 6, **characterized in that** a C value, in particular selected from the degree of browning, P value or F value, is acquired as follows:

$$C_{BT}^{UF} = \int_{ST}^{t_{End}} UF^{\frac{[Temp(t)-BT]}{10}} \, dt$$

where

ST is the time at which the starting temperature is reached,

$t_{End}$ is the time at which the setpoint C value is reached,

Temp(t) is the temperature as a function of time,
UF is a material constant of the item to be cooked, and
BT is the reference temperature.

8. Method according to one of the preceding claims, **characterized in that** $D_{12}$ and/or $D_{22}$ are used in step i).

9. Method according to one of the preceding claims, **characterized in that** during the cooking process at least one value of a cooking-device adjustment variable which influences the cooking process is defined as a function of at least one derivative of at least one cooking state variable over time.

10. Method according to one of the preceding claims, **characterized in that** the quantity of energy which is to be introduced into the cooking space in order to reach the first and second setpoint cooking state variables of the second item to be cooked is defined as a function of the quantity of energy which has been necessary in order to reach the first and second setpoint cooking state variables for the first item to be cooked.

11. Method according to one of the preceding claims, **characterized in that** after the first and second setpoint cooking state variables for the first item to be cooked have been reached, the second actual cooking state variable of the second item to be cooked is determined and the following cooking process for the second item to be cooked is controlled in order to simultaneously bring about the first and second setpoint cooking state variables of the second item to be cooked as a function of the size, the overall surface area, the volume and/or the diameter, in particular its temperature profiles, and the difference between the first setpoint cooking state variable of the first item to be cooked and the first actual cooking state variable of the second item to be cooked, wherein in particular the core temperature is selected as the first cooking state variable, and the degree of browning is selected as the second cooking state variable.

12. Method according to one of the preceding claims, **characterized in that** a cooking process sensor, in particular a core temperature sensor, which is inserted into the first item to be cooked at the start of the cooking process, preferably in step a) and is inserted into the second item to be cooked at the earliest at the time $t_1$ and at the latest at the time $t_2$, preferably in the step h), is selected as the measuring device.

13. Method according to one of the preceding claims, **characterized in that** the steps a) to i) are repeated until all the items to be cooked of the batch of items to be cooked are completely cooked having been ordered according to size, overall surface area, volume, weight and/or diameter.

14. Method according to one of the preceding claims, **characterized in that** veal or pork cutlet, chuck steak, suckling pig, chop, ham, poultry, for example chicken, knuckle of pork, roast meat, vegetables and/or parts therefore are selected as the first, second and/or further items to be cooked.

15. Cooking device having a cooking space, at least one measuring device, in particular in the form of a core temperature sensor, for picking up a first and/or second cooking state variable of at least one item to be cooked, a heating device and a control device for automatically controlling a cooking process, which device receives the output signal of the measuring device as an input signal, **characterized in that** the control device is designed to control the cooking process in accordance with the method according to Claims 1 to 14.

16. Cooking device according to Claim 15, **characterized by** a device for inputting and for storing parameter values relating to the item to be cooked and/or the cooking process, wherein the control device uses one or more of these parameter values as input variables for controlling the cooking process.

17. Cooking device according to Claim 16, **characterized in that** any setpoint cooking state variable which is to be achieved at the end of the cooking process can be input.

**Revendications**

1. Procédé de cuisson d'un lot de produits à cuire, contenant au moins deux produits à cuire, en particulier en morceaux, dont l'état de cuisson peut être **caractérisé** respectivement par l'intermédiaire d'au moins deux variables d'état de cuisson, à savoir une première variable d'état de cuisson et une deuxième variable d'état de cuisson, dans un espace de cuisson avec utilisation d'au moins un dispositif de mesure pour l'enregistrement de valeurs d'au moins une propriété d'au moins un produit à cuire, déterminant au moins une des variables d'état de cuisson qui se modifie en fonction du processus de cuisson, au moins deux des produits à cuire du lot de produits à cuire se différenciant l'un de l'autre par leur calibre, leur surface totale, leur volume, leur poids et/ou leur diamètre, en particulier leur diamètre moyen, **caractérisé par** les étapes suivantes consistant à :

a) sélectionner dans l'espace de cuisson au moins un premier produit à cuire, qui présente un calibre inférieur, une surface totale inférieure, un volume inférieur, un poids inférieur et/ou un diamètre inférieur à au moins un deuxième produit à cuire du lot de produits à cuire,

b) sélectionner des valeurs Soll pour au moins les deux variables d'état de cuisson, à savoir une première et une deuxième variables d'état de cuisson Soll, pour le premier produit à cuire,

c) effectuer le processus de cuisson de manière à ce qu'au moins la première et la deuxième variables d'état de cuisson Soll soient atteintes essentiellement de manière simultanée pour le premier produit à cuire, des valeurs Ist pour au moins une des deux variables d'état de cuisson, à savoir une première et/ou une deuxième variable(s) d'état de cuisson Ist d'au moins le premier produit à cuire, étant observées, de manière continue ou discontinue, par le dispositif de mesure,

d) retirer le premier produit à cuire du processus de cuisson lorsque les première et deuxième variables d'état de cuisson Soll à l'instant $t_1$ sont atteintes ou après ceci,

e) sélectionner au moins un deuxième produit à cuire, présentant un calibre supérieur, une surface totale supérieure, un volume supérieur, un poids supérieur et/ou un diamètre supérieur au premier produit à cuire,

f) sélectionner des valeurs Soll pour au moins les deux variables d'état de cuisson, à savoir une première et une deuxième variables d'état de cuisson Soll, pour le deuxième produit à cuire,

g) déterminer des valeurs Ist pour au moins une des deux variables d'état de cuisson d'au moins le deuxième produit à cuire, à savoir une première et/ou une deuxième variable(s) d'état de cuisson Ist, ,

h) établir la différence $D_{12}$ entre la première variable d'état de cuisson Ist du deuxième produit à cuire et la première variable d'état de cuisson Soll du premier produit à cuire, ou la différence $D'_{12}$ entre la deuxième variable d'état de cuisson Ist du deuxième produit à cuire et la deuxième variable d'état de cuisson Soll du premier produit à cuire, au plus tôt à l'instant $t_1$ et au plus tard à l'instant $t_2$, avec $t_2 > t_1$, et/ou

établir la différence $D_{22}$ entre la deuxième variable d'état de cuisson Ist et la deuxième variable d'état de cuisson Soll, ou la différence $D'_{22}$ entre la première variable d'état de cuisson Ist et la première variable d'état de cuisson Soll pour le deuxième produit à cuire, au plus tôt à l'instant $t_1$ et au plus tard à l'instant $t_2$, et

i) poursuivre le processus de cuisson en fonction de $D_{12}$, $D'_{12}$, $D_{22}$ et/ou $D'_{22}$ de manière à ce qu'au moins la première variable d'état de cuisson Soll et la deuxième variable d'état de cuisson Soll du deuxième produit à cuire soient atteintes essentiellement de manière simultanée.

2. Procédé selon la revendication 1, **caractérisé en ce que** le déroulement du processus de cuisson du premier et/ou du deuxième produit à cuire est enregistré par l'intermédiaire du dispositif de mesure grâce à la détermination d'au moins une des valeurs Ist et/ou au moins un calcul d'au moins une des valeurs Ist selon la durée.

3. Procédé selon la revendication 2, **caractérisé en ce que** le calibre, la surface totale, le volume, le poids et/ou le diamètre du premier et/ou du deuxième produit à cuire sont déterminés par l'observation du déroulement de la cuisson du premier et/ou du deuxième produit à cuire, en particulier au début, en particulier par un calcul d'au moins une première, une deuxième et/ou une autre variables d'état de cuisson selon la durée, et au moins la première, la deuxième et/ou l'autre variables d'état de cuisson Soll pour le premier et/ou le deuxième produit(s) à cuire sont sélectionnées en fonction du calibre déterminé, de la surface totale déterminée, du volume déterminé, du poids déterminé et/ou du diamètre déterminé.

4. Procédé selon l'une quelconque des revendications précédentes, **caractérisé en ce que** la première et/ou la deuxième variable(s) d'état de cuisson Soll du deuxième produit à cuire est calculée à partir de la première et/ou de la deuxième variable(s) d'état de cuisson Soll du premier produit à cuire.

5. Procédé selon l'une quelconque des revendications précédentes, **caractérisé en ce que** le premier produit à cuire représente le produit à cuire du lot de produits à cuire ayant le plus petit calibre, la plus petite surface totale, le plus petit volume et/ou le plus petit poids, et/ou le deuxième produit à cuire représente le produit à cuire du lot de produits à cuire ayant le calibre immédiatement supérieur, la surface totale immédiatement supérieure, le volume immédiatement supérieur et/ou le poids immédiatement supérieur au premier produit à cuire.

6. Procédé selon l'une quelconque des revendications précédentes, **caractérisé en ce qu'**une variable définissant un degré de cuisson interne, comprenant la température centrale, la succulence et/ou la texture, et/ou une variable de climat de cuisson, à savoir la température de l'espace de cuisson et/ou l'humidité, est sélectionnée en tant que première variable de cuisson, et/ou

une variable définissant un degré de cuisson externe, à savoir le degré de brunissement, une température superficielle, une température des zones marginales, et/ou une formation de croûtes, et/ou une variable définissant la qualité du produit à cuire, à savoir la *valeur P (valeur de pasteurisation),* la *valeur F (valeur de stérilisation),* la valeur de pH, l'odeur, le degré de maturité et/ou la conductibilité thermique, est sélectionnée en tant que deuxième variable d'état de cuisson.

7. Procédé selon la revendication 5 ou 6, **caractérisé en ce qu'**une valeur C, sélectionnée en particulier parmi le degré de brunissement, la valeur P ou la valeur F, est déterminée comme suit :

$$C_{BT}^{UF} = \int_{ST}^{t_{Ende}} UF^{\frac{[Temp(t)-BT}{10}} dt$$

dans laquelle

ST représente l'instant auquel la température de départ est atteinte,

$T_{Ende}$ représente l'instant auquel la valeur C Soll est atteinte,

Temp(t) représente la température en fonction de la durée,

UF représente une constante matérielle du produit à cuire, et

BT représente une température de référence.

8. Procédé selon l'une quelconque des revendications précédentes, **caractérisé en ce que** $D_{12}$ et/ou $D_{22}$ est utilisée dans l'étape i).

9. Procédé selon l'une quelconque des revendications précédentes, **caractérisé en ce qu'**au moins une valeur d'une variable de réglage de l'appareil de cuisson influençant le processus de cuisson est déterminée pendant le processus de cuisson en fonction d'au moins un calcul d'au moins une variable d'état de cuisson selon la durée.

10. Procédé selon l'une quelconque des revendications précédentes, **caractérisé en ce que** la quantité d'énergie à apporter dans l'espace de cuisson pour atteindre la première et la deuxième variables d'état de cuisson Soll du deuxième produit à cuire est déterminée en fonction de la quantité d'énergie qui a été nécessaire pour atteindre la première et la deuxième variables d'état de cuisson Soll pour le premier produit à cuire.

11. Procédé selon l'une quelconque des revendications précédentes, **caractérisé en ce que** la deuxième variable d'état de cuisson lst du deuxième produit à cuire est déterminée après avoir atteint la première et la deuxième variables d'état de cuisson Soll pour le premier produit à cuire, et le processus de cuisson qui succède pour le deuxième produit à cuire est réalisé en vue de l'obtention simultanée de la première et de la deuxième variables de cuisson Soll du deuxième produit à cuire en fonction du calibre, de la surface totale, du volume et/ou du diamètre, en particulier de sa courbe de température, ainsi que de la différence entre la première variable d'état de cuisson Soll du premier produit à cuire et la première variable d'état de cuisson lst du deuxième produit à cuire, la température centrale étant en particulier sélectionnée en tant que première variable d'état de cuisson, et le degré de brunissement en tant que deuxième variable d'état de cuisson.

12. Procédé selon l'une quelconque des revendications précédentes, **caractérisé en ce qu'**un capteur du processus de cuisson, en particulier un capteur de température centrale, est sélectionné en tant que dispositif de mesure, qui est enfoncé au début du processus de cuisson, de préférence à l'étape a), dans le premier produit à cuire, et qui est renfoncé dans le deuxième produit à cuire au plus tôt à l'instant $t_1$ et au plus tard à l'instant $t_2$, de préférence à l'étape h).

13. Procédé selon l'une quelconque des revendications précédentes, **caractérisé en ce que** les étapes a) à i) sont répétées jusqu'à ce que tous les produits à cuire du lot de produits à cuire, rangés par calibre, surface totale, volume, poids et/ou diamètre, aient fini de cuire.

14. Procédé selon l'une quelconque des revendications précédentes, **caractérisé en ce que** des escalopes, des palerons de boeuf, des cochons de lait, des côtelettes, des jambons, des volailles, par exemple des coquelets, des pieds de cochon, des rôtis, des légumes et/ou des parties de ceux-ci sont sélectionnés en tant que premier, deuxième et/ou autre produit de cuisson.

15. Appareil de cuisson muni d'un espace de cuisson, d'au moins un dispositif de mesure, en particulier sous forme d'un capteur de température centrale, pour l'enregistrement d'une première et/ou d'une deuxième variable d'état de cuisson d'au moins un produit à cuire, d'un dispositif de chauffage et d'un dispositif de contrôle pour la réalisation automatique d'un processus de cuisson, lequel reçoit en tant que signal d'entrée le signal de sortie du dispositif de mesure,
**caractérisé en ce que**
le dispositif de contrôle est réglé pour réaliser le processus de cuisson d'un procédé selon les revendications 1 à 14.

16. Appareil de cuisson selon la revendication 15, **caractérisé par** un dispositif pour la saisie et la mémorisation de valeurs de paramétrage concernant le produit à cuire et/ou le processus de cuisson, le dispositif de contrôle utilisant une ou plusieurs de ces valeurs de paramétrage en tant que variables d'entrée pour la réalisation du processus de cuisson.

17. Appareil de cuisson selon la revendication 16, **caractérisé en ce que** chaque variable d'état de cuisson Soll à atteindre à la fin du processus de cuisson peut être saisie.

## Fig. 1

Kerntemperatur     1. Umstecken     2. Umstecken

$KT_{soll}$

A

B

C

D12

KT-Verlauf kleiner Braten

KT-Verlauf mittlerer Braten

KT-Verlauf großer Braten

$t_1$       $t_2$     Zeit

## Fig. 2

Kerntemperatur

$KT_{soll}$

D12

D

D'

Kleiner Braten

Großer Braten

$t_1$     Zeit

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29923215
- EP 1022972 B1
- US 4036995 A

**In der Beschreibung aufgeführte Nicht-Patentliteratur**

- Lebensmittel und Bioverfahrenstechnik - Molkerei Technologie. **H.G. KESSLER.** Lebensmittel und Bioverfahrenstechnik - Molkerei Technologie. Verlag A. Kessler, 27-48127-178